**Europäisches Patentamt**

**European Patent Office**

**Office européen des brevets**

(11) Veröffentlichungsnummer: **0 219 921 B1**

(12) **EUROPÄISCHE PATENTSCHRIFT**

(45) Veröffentlichungstag der Patentschrift: **08.01.92**

(51) Int. Cl.⁵: **G11B 15/10**

(21) Anmeldenummer: **86201841.3**

(22) Anmeldetag: **22.10.86**

(54) **Magnetbandgerät mit mindestens zwei Drucktasten.**

(30) Priorität: **24.10.85 DE 3537836**

(43) Veröffentlichungstag der Anmeldung:
**29.04.87 Patentblatt 87/18**

(45) Bekanntmachung des Hinweises auf die
Patenterteilung:
**08.01.92 Patentblatt 92/02**

(84) Benannte Vertragsstaaten:
**DE FR GB IT**

(56) Entgegenhaltungen:
**DE-A- 2 749 966**
**DE-A- 3 042 748**
**GB-A- 2 067 337**
**US-A- 3 900 173**
**US-A- 4 179 721**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

Patentinhaber: **N.V. Philips' Gloeilampenfabrieken
Groenewoudseweg 1
NL-5621 BA Eindhoven(NL)**

(84) Benannte Vertragsstaaten:
**FR GB IT**

(72) Erfinder: **Kunze, Norbert
Mozartstrasse 7
W-6332 Ehringshausen(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

Rank Xerox (UK) Business Services

**Beschreibung**

Die Erfindung bezieht sich auf ein Magnetbandgerät mit mindestens zwei Drucktasten, die beim getrennten Eindrücken ihrer Tastenstangen an Geräteteilen Einzelfunktionen ausüben,

- wobei jede der mittels Federn in Richtung ihrer Ausgang-Ruhestellungen zugbelasteten Tastenstangen in eingedrückter Stellung arretierbar ist mittelseines federbelasteten Sperrgliedes, das mit Rastnasen an den Tastenstangen unterschiedlich ausgebildete Rastanordnungen bildet,
- wobei das Sperrglied eine quer zur Eindrückrichtung verlaufende Sperrkante, eine erste zur Eindrückrichtung schräg verlaufende Schiebekante und zwischen der Sperrkante und der ersten schrägen Schiebekante eine mit der ersten Schiebekante einen stumpfen Winkel einschließende schräge zweite Schiebekante aufweist und wobei die erste schräge Schiebekante beim Einschieben einer Tastenstange und die zweite schräge Schiebekante beim Herausfahren eine andere Tstenstange entriegelt.

Aus der DE-PS 22 33 127 ist ein Magnetbandgerät bekannt, in dem mehrere Tastenstangen jeweils mit einer Rastnase versehen sind, die in Aussparungen eines quer verschieblichen, als Schieber ausgebildeten Sperrgliedes eingreift. Die Rastnasen können, nachdem sie beim Eindrücken mittels schräger Kanten an den Aussparungen das Sperrglied seitlich verschoben haben, in zugeordnete Rastmulden einfallen. Die so in eingeschobener Stellung arretierten Tastenstangen können damit im Gerät bestimmte Betriebsfunktionen einstellen. Reim Eindrücken einer zuvor ausgefahrenen Tastenstange drückt auch diese das Sperrglied über ihre Rastnase beiseite. Wird die andere, zuvor arretierte Tastenstange in der eingeschobenen Stellung nicht von Hand festgehalten, dann springt diese Tastenstange beim Eindrücken der anderen Tastenstange heraus. Werden für eine andere Funktionsvorgabe beide Tastenstangen gemeinsam eingedrückt, dann fallen die Rastnasen beider Tastenstangen hinter Rastkanten der Aussparungen und sind damit beide verriegelt. Eine Entriegelung dieser beiden Tastenstangen ist nur möglich unter Zuhilfenahme einer dritten Tastenstange, die das Sperrglied mit einer schrägen Kanten so weit verschiebt, daß beide arretierten Rastnasen von den Sperrkanten freikommen. Alle Tastenstangen sind mit Hilfe von Federn in Ausfahrrichtung vorbelastet, so daß sie beim Freigeben der Rastnasen immer in ihre Ausgangsstellung zurückfahren.

Aus der US-A 4 179 721 ist darüber hinaus ein Betätigungsmechanismus in einem Magnetbandgerät nach dem oberbegriff des Patentanspruchs 1 bekannt, bei dem ein als Schieber ausgebildetes Sperrglied mit schrägen Schiebekanten versehen ist, die in Einschub- und in Ausfahrrichtung wirken. Die Schiebekanten schließen dabei einen stumpfen Winkel miteinander ein. Eine gedrückte und durch das Sperrglied verriegelte erste Taste wird durch Drücken einer zweiten Taste entriegelt. Die gedrückte und verriegelte zweite Taste wird durch das Drücken der ersten Taste entriegelt. Ferner wird bei gleichzeitigem Eindrücken beider Tasten die Verriegelung einer der beiden Tasten verhindert. Diese damit nicht verriegelte Taste kehrt beim Loslassen aufgrund einer vorgespannten Feder in ihre Ausgangslage zurück und bewirkt dabei eine Entriegelung der anderen gedrückten Taste über eine der schrägen Schiebekanten.

Bei beiden bekannten Konstruktionen wirkt jede Tastenstange mit einer anderen Sperrglied-Aussparung zusammen, und das Sperrglied hat damit eine recht aufwendige und ausladende Konstruktion.

Es ist Aufgabe der Erfindung, bei einem Magnetbandgerät den Verriegelungsmechanismus von Tastenstangen zu verkleinern unter Beibehaltung einer Konstruktion, bei der die Tastenstangen auch beim gemeinsamen Eindrücken immer entriegelbar sind.

Die gestellte Aufgabe wird erfindungsgemäß durch die kennzeichnenden Merkmale des Patentanspruchs 1, gelöst.

Durch die Ausbildung des Sperrgliedes als schwenkbare Klinke wird dieses sehr kompakt, was bei kleinbauenden Geräten von großer Bedeutung ist. Die Ausbildung als Kunststoffspritzteil ermöglicht es, die Feder zum Bestandteil der Sperrklinke zu machen und diese Feder gleichzeitig von der jeweilig eingeschobenen Sperrtaste so vorzuspannen, daß die die Sperrwirkung erzielende Federkraft erzeugt wird. Eine solche Klinkenausbildung läßt sich einfach herstellen; sie verlangt keine zusätzliche Montage einer Feder. Die Feder ist nur vorgespannt, wenn eine Taste eingeschoben ist. Die Anordnung ist kleinbauend und von besonderem Vorteil bei Autoradio-Kassettengeräten, bei denen wenig Platz zur Verfügung steht. Die Herstellung eines Gerätes wird damit wirtschaftlicher.

Dadurch, daß die Tastenstangen mit unterschiedlichen Rastnasen bzw. Rastanordnungen versehen sind, ist sichergestellt, daß bei einem Sperrglied mit nur einer Sperrkante und nur zwei schrägen Schiebekanten, ganz gleich, ob eine Tastenstange gerade eingedrückt wird oder ob man sie beim Eindrücken losläßt, eine Rastnase auf eine schräge Schiebekante aufläuft und damit die andere Rastanordnung beide Rastanordnungen entrastet.

Nach einer weiteren Ausgestaltung der Erfindung ist vorgesehen, daß die Rastnasen derart ausgebildet sind, daß der jeweilige Einschubweg einer Tastenstange bis zum Entriegeln einer anderen, zuvor gerasteten Tastenstange etwa gleich ist. Die unterschiedliche Ausbildung der Rastnasen kann beispielsweis in deren Länge in Einschubrichtung oder in dem Ansetzen einer Zusätzlichen Nase bestehen. Auf jeden Fall ist damit sichergestellt, daß für das Entriegeln alle Tastenstangen mit unterschiedlichen Typen von Rastanordnungen die gleichen Einschubwege bis zum Entrasten ausführen. Damit wird die Bedienung komfortabler.

Die Erfindung wird anhand der in den Zeichnungen dargestellten Ausführungsbeispiele näher erläutert. Es zeigen:

Fig. I eine Draufsicht auf ein in ein Autoradio einzubauendes Magnetbandgerät mit zwei Drucktasten in ihrer ausgefahrenen Ruhestellung,

Fig. 2 eine andere Anordnung bzw. Zuordnung von einer Sperrklinke zu Rastnasen von Drucktastenstangen,

Fig. 3 eine Draufsicht auf den Aufbau nach Fig. 2,

Fig. 4 eine Prinzipdarstellung eines Rastschiebers mit zugeordneten Rastnasen von Tastenstangen.

Das in Fig. I dargestellte Magnetbandgerät weist ein Gestell I auf, das über eine Stütze 2 einen nur in einer Richtung umlaufenden Antriebsmotor 3 trägt. Das Antriebsritzel 4 des Motors 3 führt eine Pese 5, die über eine Schrungradscheibe 8 geführt ist. Die Schwungscheibe 8 ist im Gestell I gelagert und ist fest verbunden mit einer Tonwelle I0. Weiterhin ist die Schwungscheibe 8 mit einem Zahnrad I2 verbunden. Über eine Rutschkupplung ist koaxial zu dem Zahnrad I2 ein weiteres Zahnrad I4 auf der Schwungscheibe 8 drehbar angeordnet.

Weiter sind im Gestell I Wickeldorne gelagert, die fest verbunden sind mit Schnellspulrädern 22, 23. Über eine Rutschkupplung ist mit einem der Wickeldorne ein Spielrad verbunden. Ein Bügel 26, der verschiebbar im Gestell gelagert ist, trägt nebeneinander zwei Zahnräder 28, 29. Eine Feder 30 drückt den Bügel 26 immer in eine Fig. I dargestellte Ausgangsposition.

Der Bügel 26 trägt zwei Stifte 28a und 29a, die in einem dreieckigen Loch 28b bzw. einem Schlitz 29b verschiebbar sind im Gestell I.

Zum schnellen Vor- und Rücklauf sind zwei Tasten 3I, 32 vorgesehen. Über Tastenstangen 33 und 34 sind diese Tasten 3I, 32 mit Schiebern 35, 36 verbunden. Diese Schieber 35 und 36 wirken auf den Bügel 26 ein. Dazu ist der Schieber mit einem Ansatz 37 versehen. Der Schieber 36 trägt entsprechend eine Auflauffläche 38. Der Ansatz 37 und die Auflauffläche 38 arbeiten auf einen Stift 39 des Bügels 26. Weiterhin sind die Schieber 35, 36 mit Auflaufflächen 35a, 35b bzw. 36a, 36b versehen, die auf Stifte 74c bzw. 74d einer nicht dargestellten Kopfplatte arbeiten können. Diese Kopfplatte liegt auf der anderen Seite des Gestells I.

Wenn durch Eindrücken und Verrasten der Tastenstange 33 durch ein Sperrglied 20 der Ansatz 37 gegen den Stift 39 des Bügels 26 drückt, kommt erst das Zahnrad 29 in Eingriff mit dem Zahnrad I3. Dabei macht der Stift 28a eine Bewegung in Richtung des Pfeiles b und der Stift 29a eine Bewegung in Richtung des Pfeiles c'. Bei weiterer Bewegung fährt der Stift 29a weiter in Richtung des Pfeiles b' und kommt das Zahnrad 29 in Eingriff mit dem Zahnrad 23. Das Magnetband wird jetzt mit dem mit dem Zahnrad 23 verbundenen Wickeldorn schnell aufgewickelt. Wird die andere Tastenstange 34 eingedrückt und auf später zu beschreibende Weise mit dem Sperrglied 20 verriegelt, dann wirkt die Auflauffläche 38 auf den Stift 39 des Bügels 26 ein, wodurch der Stift 28a in Richtung des Pfeiles c und der Stift 29a in Richtung des Pfeiles c' fährt, wodurch das Zahnrad 29 mit dem Zahnrad I3 in Eingriff und das Zahnrad 28 mit dem Zahnrad 22 in Eingriff kommen. Dadurch wird der andere, mit dem Zahnrad 22 verbundene Wickeldorn zum Schnellspulen angetrieben.

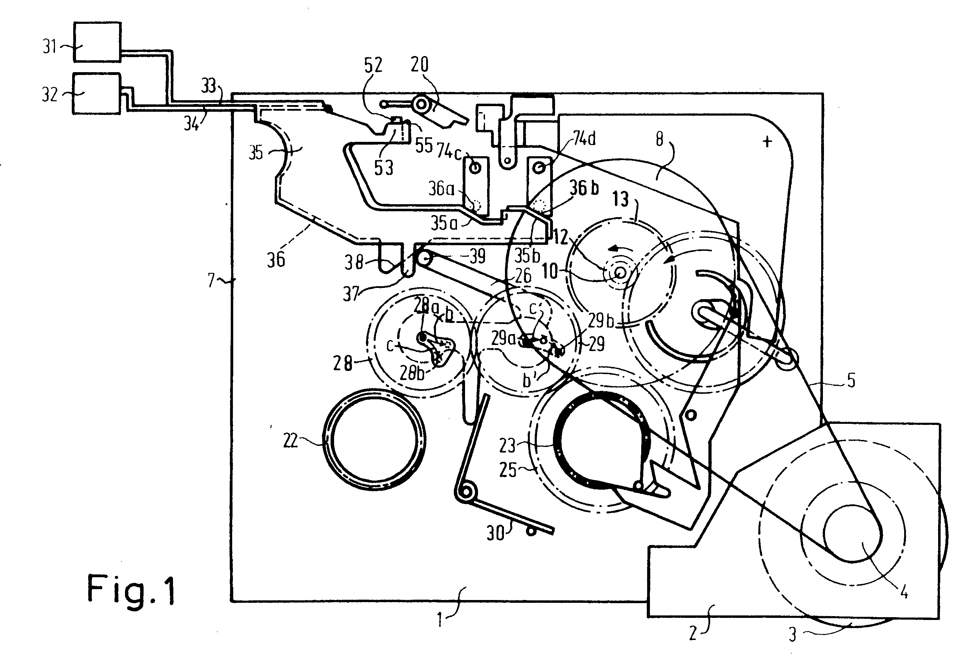

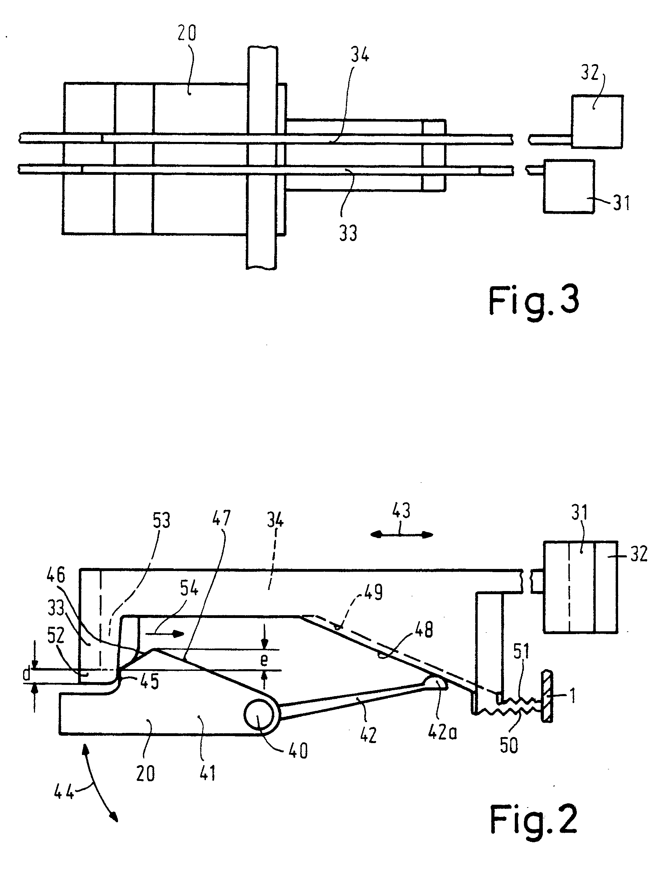

Fig. 2 und 3 zeigen schematisch das Zusammenwirken der Tastenstangen 33, 34 mit dem Sperrglied 20, wobei der Einfachheit halber die in Fig. I dargestellten Schieber 35 und 36 weggelassen sind. Das Sperrglied 20 ist als Klinke ausgebildet, die um eine Achse 40 verschwenkbar ist. Die Klinke 20 besteht aus einem Klinkenkörper 4I und einem an diesen aus Kunststoff gespritzten Klinkenkörper angespritzten Kunststoffarm 42, der federnd ausgebildet ist. Weil die Achse 40 der Klinke 20 sich senkrecht zur Verschieberichtung 43 der Tastenstangen 33, 34 erstreckt, kann der Klinkenkörper 4I in Richtung eines Doppelpfeiles 44 verschwenken. Im Bereich des freien Endes des Klinkenkörpers 4I befindet sich eine Sperrkante 45. An die Sperrkante 45 schließt sich eine zweite schräge Schiebekante 46 an, die mit einer sich an sie anschließenden ersten schrägen Schiebekante 47 einen stumpfen Winkel einschließt. Das freie Ende 42a des Kunststoffarmes 42 kann mit schrägen Flächen 48 und 49 der Tastenstangen 33 und 34 zusammenwirken.

Die Tastenstangen 33 und 34 sind mittels Federn 50, 5I in Ausfahrrichtung zugbelastet. Die Federn 50 und 5I greifen am Gestell I an. Die Tastenstangen 33 und 34 sind mit Rastnasen 52, 53 versehen. Die Rastnasen 52 und 53 erstrecken sich tangential zur Klinkenschwenkachse 40 und haben in Richtung auf den Klinkenkörper 5I eine unterschiedliche Länge. Die Länge der Rastnase 52 ist dabei größer als die Länge der Rastnase 53. Der Längenunterschied zwischen der Rastnase 52 und 53 ist mit d bemessen.

Bei Fig. 2 und 3 ist die Tastenstange 33 eingedrückt, so daß die Rastnase 52 hinter der Sperrkante 45 verrastet ist. Infolge des Einschiebens drückt die schräge Fläche 48 der Tastenstange 33 gegen den Kunststoffarm 42, und der Klinkenkörper 4l wird damit im Uhrzeigersinn federbelastet, wodurch sich eine stabile Verriegelung ergibt. Weiter ist dargestellt, daß auch die Tastenstange 34 zugleich eingedrückt ist, womit auch die Rastnase 53 hinter die zweite schräge Schieberkante 46 gelangt ist. Die Rastnase 53 hat damit keine Verriegelung erfahren, sondern wird von der Feder 5l in Richtung eines Pfeiles 54 wieder zurückgezogen. Damit schwenkt der Klinkenkörper 4l entgegen dem Uhrzeigersinn und gibt auch die Rastnase 52 frei. Hierdurch ist sichergestellt, daß beim gemeinsamen Eindrücken beider Tastenstangen 33, 34 beide Tastenstangen auch wieder gleichzeitig entriegelt werden und ausfahren.

Hierbei ist wichtig, daß die Rastnase 52 und die Sperrkante 45 einerseits und die Rastnase 53 und die Sperrkante 45 andererseits verschiedene Typen von Rastanordnungen bilden. Beide Rastanordnungen geben individuell die Möglichkeit, nur eine der Tastenstangen 33 oder 34 einzudrücken und sicher zu verrasten. Der Aufbau der Rastanordnungen ist dabei so getroffen, daß die Tastenstangen mit unterschiedlicher Rastanordnung vom Sperrglied 20 bei wechselseitigem Eindrücken zum Ausfahren freigegeben werden und daß das Sperrglied 20 beim gemeinsamen Eindrücken dieser Tastenstangen 33, 34 diese beiden ebenfalls zum Ausfahren freigibt. Wichtig hierbei ist, daß sich die Rastnasen 52, 53 tangential zur Klinkenschwenkachse 40 erstrecken und Rastnasen zweier unterschiedlicher Rastanordnungen unterschiedliche tangentiale Erstreckungen haben, wobei der Abstand d (Fig. 2) kleiner ist als die Länge der möglichen Auslenkbewegung e bzw. g, die von der Rastnase 53 bewirkbar ist.

Wie aus Fig. l ersichtlich, ist an der Rastnase 53 ein zusätzlicher Ansatz 55 vorgesehen. Diese zusätzliche Ansatz dient dazu, daß der jeweilige Einschubweg einer Tastenstange bis zum Entriegeln eine anderen, zuvor gerasteten Tastenstange immer etwa gleich ist.

**Patentansprüche**

1. Magnetbandgerät mit mindestens zwei Drucktasten (31, 32), die beim getrennten Eindrükken ihrer Tastenstangen (33, 34) an Geräteteilen Einzelfunktionen ausüben,
   - wobei jede der mittels Federn (50, 51) in Richtung ihrer Ausgang-Ruhestellungen zugbelasteten Tastenstangen (33, 34) in eingedrückter Stellung arretierbar ist mittels eines federbelasteten Sperrgliedes (20), das mit Rastnasen (52, 53) an den Tastenstangen (33, 34) unterschiedlich ausgebildete Rastanordnungen bildet,
   - wobei das Sperrglied (20) eine quer zur Eindrückrichtung verlaufende Sperrkante (45), eine erste, zur Eindrückrichtung schräg verlaufende Schiebekante (47) und zwischen der Sperrkante (45) und der ersten schrägen Schiebekante (47) eine mit der ersten Schiebekante (47) einen stumpfen Winkel einschließende schräge zweite Schiebekante (46) aufweist und wobei die erste schräge Schiebekante (47) beim Einschieben einer Tastenstange (33) und die zweite schräge Schiebekante (46) beim Herausfahren eine andere Tastenstange (34) entriegelt,
   dadurch gekennzeichnet, daß
   - das Sperrglied (20) als schwenkbare Klinke ausgebildet ist, die von den Rastnasen (52, 53) über die Schiebekanten (46, 47) gegen Federkraft verschwenkbar ist,
   - sich die Rastnasen (52, 53) tangential zur Klinkenschwenkachse (40) erstrecken und Rastnasen (52, 53) zweier unterschiedlicher Tastenstangen (33, 34) unterschiedliche tangentiale Erstreckungen haben so, daß bei gemeinsam eingedrückten Tasten (31, 32) nur die Rastnase (52) einer der Tastenstangen gegen die Sperrkante (45) anliegt und die zugehörige Taste (31) verriegelt,
   - die Länge (e) der Auslenkbewegung des Sperrgliedes (20) an der Sperrkante (45) beim Längsschieben einer der Rastnasen (52, 53) der Tastenstangen (33, 34) längs einer der zugehörigen schrägen Schiebekanten (46, 47) immer größer ist als die Länge (d) tangential zur Klinkenschwenkachse, auf die die andere Rastnase an der Sperrkante (45) anliegt,
   - die Sperrklinke (20) als Kunststoffspritzteil ausgebildet ist, wobei einstückig an ihr ein federnder Kunststoffarm (42) vorgesehen ist, der beim Eindrücken der Tastenstangen (33, 34) von auf ihn auflaufenden schrägen Kanten (48, 49) der Tastenstangen (33, 34) zur Ausbildung der die Sperrwirkung erzielenden Federkraft federnd vorspannbar ist.

2. Magnetbandgerät nach Anspruch 1, dadurch gekennzeichnet, daß die Rastnasen (52, 53) derart ausgebildet sind, daß der jeweilige Einschubweg einer Tastenstange (33, 34) bis zum Entriegeln einer anderen, zuvor gerasteten Tastenstange etwa gleich ist.

## Claims

1. A magnetic tape apparatus having at least two push-buttons (31, 32) which, when their push-button rods (33, 34) are pressed in separately, perform separate functions upon apparatus parts,
    - which push-button rods (33, 34), which are loaded in tension towards their initial rest positions by means of springs (50, 51), can each be locked in the pressed-in position by means of a spring-loaded latching member (20) which forms latching arrangements of different construction with latching noses (52, 53) on the push-button rods (33, 34),
    - the latching member (20) comprising a latching edge (45) extending transversely of the press-in direction, a first sliding edge (47) which is inclined relative to the press-in direction and, between the latching edge (47) and the inclined first sliding edge (47), an inclined second sliding edge (46) extending at an obtuse angle relative to the first sliding edge ((47), and the inclined first sliding edge (47) unlocking one push-button rod (33) during the inward movement and the inclined second sliding edge (46) unlocking another push-button rod during the outward movement,
    characterised in that
    - the latching member (20) is constructed as a pivotable latch which is pivotable against spring force by the latching noses (52, 53) *via* the sliding edges (46, 47),
    - the latching noses (52, 53) extend tangentially of the latch pivot (40) and latching noses (52, 53) of two different push-button rods (33, 34) have different tangential extents in such a manner that only the latching nose (52) of one of the push-button rods engages against the latching edge (45) and locks the associated button (31) when the buttons (31, 32) are pressed together,
    - the length (e) of the excursion of the latching member (20) at the latching edge (45) during the movement of one of the latching noses (52, 53) of the push-button rods (33, 34) along one of the associated inclined sliding edges (46, 47) is always greater than the length (d), tangentially of the latch pivot, over which the other latching nose engages with the latching edge(45),
    - the latch (20) is constructed as an injection-moulded plastics part having an integral resilient plastics arm (42) which, when the push-button rods (33, 34) are pressed inwards, can be pretensioned resiliently by the inclined edges (48, 49) of the push-button rods (33, 34) engaging with said arm, to provide the spring force producing the locking action.

2. A magnetic-tape apparatus as claimed in Claim 1, characterised in that the latching noses (52, 53) are constructed in such a way that the respective inward travel of a push-button rod (33, 34) before another previously locked push-button rod is released is always substantially the same.

## Revendications

1. Appareil à bande magnétique .comportant au moins deux boutons-poussoirs (31, 32) qui, lors de l'enfoncement séparé de leurs tiges (33, 34), exercent des fonctions individuelles dans des parties de l'appareil,
    - chacune des tiges de boutons-poussoirs (33, 34) rappelées par traction au moyen de ressorts (50, 51) vers leurs positions de repos initiales pouvant être arrêtée en position enfoncée au moyen de son élément d'arrêt à ressort (20) qui, avec des talons d'encliquetage (52, 53) prévus sur les tiges de boutons-poussoirs (33, 34), forme des dispositifs d'encliquetage de configurations différentes,
    - l'élément d'arrêt (20) comportant un bord d'arrêt (45) s'étendant perpendiculairement à la direction d'enfoncement, un premier bord de glissement (47) s'étendant obliquement à la direction d'enfoncement et, entre le bord d'arrêt (45) et le premier bord de glissement oblique (47), un second bord de glissement oblique (46) formant un angle obtus avec le premier bord de glissement (47), le premier bord de glissement oblique (47), lors de l'enfoncement, déverrouillant une tige de bouton-poussoir (33) et le second bord de glissement oblique (46), lors de la sortie, déverrouillant une autre tige de bouton-poussoir (34),
    caractérisé en ce que :
    - l'élément d'arrêt (20) a la forme d'un cliquet pivotant qui peut pivoter à l'intervention des talons d'encliquetage (52, 53), par l'intermédiaire des bords de glissement (46, 47), à l'encontre de la sollicitation d'un ressort,
    - les talons d'encliquetage (52, 53) s'étendent tangentiellement à l'axe de pivotement (40) du cliquet et les talons d'encliquetage (52, 53) de deux tiges de boutons-poussoirs différentes (33, 34) présentent des extensions tangentielles différentes, de sorte que, lors de l'enfoncement commun des boutons-poussoirs (31, 32), seul le talon d'encliquetage (52) d'une des tiges de boutons-poussoirs est appliqué contre le bord d'arrêt (45) et verrouille le bouton-poussoir (31) associé,

- la longueur (e) du mouvement de déviation de l'élément d'arrêt (20) au niveau du bord d'arrêt (45) lors du déplacement longitudinal d'un des talons d'encliquetage (52, 53) des tiges de boutons-poussoirs (33, 34) le long d'un des bords de glissement obliques (46, 47) associés est toujours supérieure à la longueur (d) tangentielle à l'axe de pivotement du cliquet, sur laquelle l'autre talon d'encliquetage est appliqué contre le bord d'arrêt (45),

- le cliquet d'arrêt (20) a la forme d'une pièce moulée par injection en matière plastique, un bras en matière plastique à effet de ressort (42) étant prévu d'une pièce sur ce cliquet et pouvant être précontraint élastiquement, lors de l'enfoncement des tiges de boutons-poussoirs (33, 34), par des bords obliques (48, 49) des tiges de boutons-poussoirs (33, 34) qui agissent sur ce bras pour créer la force de ressort assurant l'effet d'arrêt.

2. Appareil à bande magnétique suivant la revendication 1, caractérisé en ce que les talons d'encliquetage (52, 53) sont conçus d'une manière telle que le trajet d'enfoncement respectif d'une tige de bouton-poussoir (33, 34) jusqu'au déverrouillage d'une autre tige de bouton-poussoir précédemment encliquetée est à peu près pareil.

Fig.1

Fig.3

Fig.2